Europäisches Patentamt

European Patent Office

Office européen des brevets

(19)

(11) Veröffentlichungsnummer: **0 005 146**
**B1**

(12) **EUROPÄISCHE PATENTSCHRIFT**

(45) Veröffentlichungstag der Patentschrift:
**29.04.81**

(21) Anmeldenummer: **79100479.9**

(22) Anmeldetag: **19.02.79**

(51) Int. Cl.³: **F 16 C 11/04**, B 60 J 3/02

(54) **Gegenlagerböckchen für Fahrzeugsonnenblenden.**

(30) Priorität: **08.05.78 DE 7813819 U**

(43) Veröffentlichungstag der Anmeldung:
**14.11.79 Patentblatt 79/23**

(45) Bekanntmachung des Hinweises auf die Patenterteilung:
**29.04.81 Patentblatt 81/17**

(84) Benannte Vertragsstaaten:
**DE FR GB IT SE**

(56) Entgegenhaltungen:
**DE-A-1 808 875**
**FR-A-2 186 368**
**FR-A-2 277 268**

(73) Patentinhaber: **Gebr. Happich GmbH,
Postfach 10 02 49 Clausenbrücke 1,
D-5600 Wuppertal 1 (DE)**

(72) Erfinder: **Viertel, Lothar, Scottweg 67,
D-5600 Wuppertal 11 (DE)**
Erfinder: **Nowak, Manfred, Hasselstrasse 159,
D-5650 Solingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

Gegenlagerböckchen für Fahrzeugsonnenblenden

Die Erfindung betrifft ein Gegenlagerböckchen für Fahrzeugsonnenblenden, das aus Kunststoff gebildet ist, eine hinterschnittene Lageröffnung zur Aufnahme der Sonnenblendenachse aufweist und eine Durchstecköffnung für ein Befestigungselement besitzt, in der fußseitig eine mit einem Durchbruch versehene Anlagefläche für den Kopf des Befestigungselementes angeordnet ist.

Derartige Gegenlagerböckchen nehmen einen Endbereich der Sonnenblendenachse auf und stützen damit den Sonnenblendenkörper in jeder möglichen Klapplage ab. Da sie somit eine Haltefunktion erfüllen, bestehen sie aus einem relativ formstabilen und hart eingestellten Kunststoffmaterial. Die Gegenlagerböckchen sind in Fahrzeugen in dem Bereich angeordnet, in dem bei Auffahrunfällen od. dgl. Fahrzeuginsassen mit dem Kopf aufprallen können. Die Verletzungsgefahr wird bei einem Aufprallen auf die Gegenlagerböckchen herkömmlicher Bauart noch dadurch gefördert, daß die Randkanten der Durchstecköffnung relativ scharfkantig ausgeführt sind, so daß die bekannten Gegenlagerböckchen nicht den nunmehr recht scharf gehandhabten Sicherheitsbestimmungen, wie sie in den EWG-Rechtsvorschriften über die Innenausstattung der Kraftfahrzeuge festgelegt sind, genügen.

Durch die FR-A-2 277 268 ist es bekannt, das Lagerböckchen einer Fahrzeugsonnenblende über ein Filmscharnier einstückig mit einem Deckel auszubilden. Der Deckel ist hier jedoch aus rein ästhetischen Gründen vorgesehen und übegreift das gesamte Lagergehäuse nebst der darin im Boden vorgesehenen Durchstecköffnung. Der Deckel selber, der recht materialaufwendig und damit teuer ist, ist in dem Bereich, in dem bei einem Unfall Fahrzeuginsassen mit dem Kopf aufprallen können, relativ scharfkantig ausgebildet und daher nicht geeignet, eine Schutzfunktion zu erfüllen.

Ferner zeigt die FR-A-2 186 368 ein Lagerböckchen für eine Fahrzeugsonnenblende, das ebenfalls über ein Filmscharnier mit einem Deckel ausgebildet ist. Auch hier übergreift der dazu recht großvolumig ausgebildete Deckel das gesamte Lagerböckchen. Der Deckel soll hier neben seiner Aufgabe der Abdeckung dazu dienen, den Aufbau der Sonnenblende durch angeformte Funktionsteile zu vereinfachen.

Ausgehend von einem Gegenlagerböckchen der eingangs genannten Art liegt nun der Erfindung die Aufgabe zugrunde, dasselbe unter Ausnutzung der bekannten in der Anformung eines Deckels besetehenden Maßnahme so zu gestalten, daß die Öffnungskanten der Durchstecköffnung keine Verletzungsgefahr mehr begründen können. Neben der den Sicherheitsanforderungen vollauf genügenden Ausbildung soll sich das Gegenlagerböckchen noch durch eine besonders einfache, material- und kostensparende Herstellbarkeit auszeichnen.

Zur Lösung dieser Aufgabe ist erfindungsgemäß vorgesehen, daß die Durchstecköffnung mittels eines ihrem Öffnungsquerschnitt angepaßten, über ein Filmscharnier einstückig an dem Gegenlagerböckchen angeformten Deckels verschließbar ist, daß an dem freien, dem Filmscharnier gegenüberligenden Ende des Deckels eine zahnartig vorstehende Kante angeformt ist, die in eine an der benachbarten Randkante der Durchstecköffnung angeordnete zahnlückenartige Rinne einklipsbar ist und daß der die Durchstecköffnung begrenzende Rand eine umlaufende stufenförmige Absetzung zur randseitigen Auflage des Deckels aufweist, deren Höhe der Deckeldicke entspricht.

Die Erfindung besitzt eine Reihe besonderer Vorteile. So weist der Deckel nur eine dem Öffnungsquerschnitt der Durchstecköffnung entsprechende Größe auf. Er befindet sich somit nur dort, wo er von Vorteil ist, um die scharfkantigen Öffnungsränder der Durchstecköffnung wirkungslos bzw. nicht mehr beaufschlagbar zu machen. Durch die relativ kleine Ausbildung des Deckels tritt praktisch keine Verteuerung ein, weil der Materialverbrauch vernachlässigbar gering ist. Ein Verschließen der Durchstecköffnung ist durch ein schnell und einfach durchzuführendes Einklipsen des Deckels zu erreichen. In der geschlossenen Lage bildet der Deckel mit dem Lagerböckchen eine glatt durchlaufende Außenkontur. Da der Deckel an der Rückseite randseitig durch die stufenförmige Absetzung abgestützt ist, kann er auch bei einer Beaufschlagung nicht weiter als vorgegeben in die Durchstecköffnung hineingedrückt werden. Nicht zuletzt erhält das Lagerböckchen durch den die Montage- bzw. die Durchstecköffnung verschließenden Deckel ein gefälliges Aussehen.

Ein Ausführungsbeispiel eines Gegenlagerböckchens nach der Erfindung wird nachfolgend anhand der Zeichnung erläutert. Es zeigt

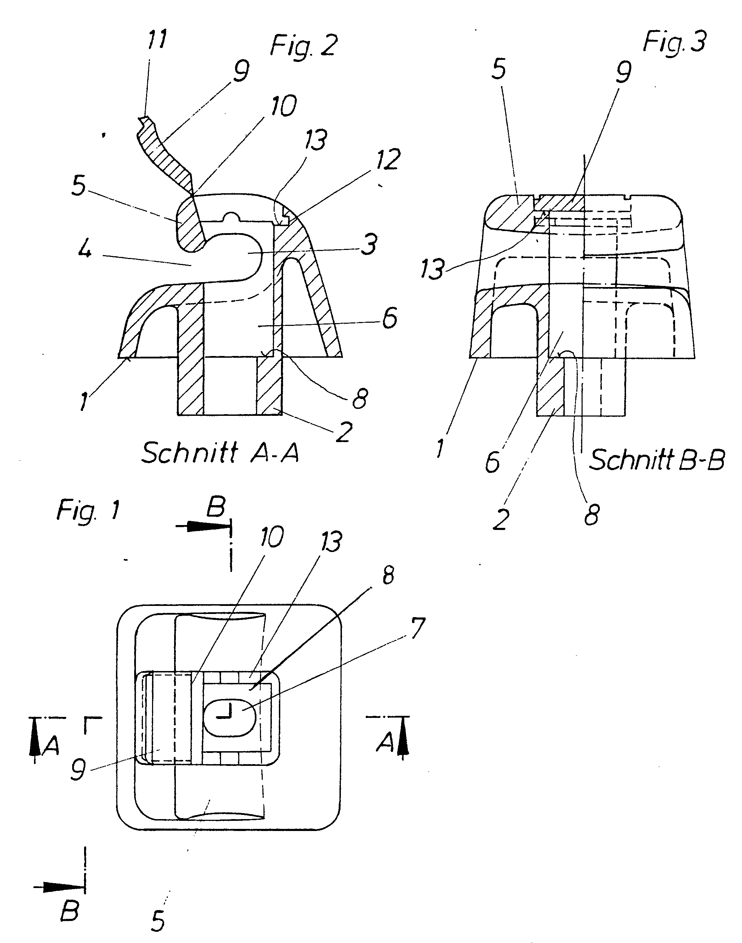

Fig. 1 eine Draufsicht auf das Gegenlagerböckchen,

Fig. 2 einen Schnitt gemäß der Linie A-A nach Fig. 1 und

Fig. 3 einen Schnitt gemäß der Linie B-B nach Fig. 1.

Das Gegenlagerböckchen besitzt einen kastenförmigen, nach dem Hohlkammerprinzip gestalteten Aufbau mit einer umlaufenden Anlagefläche 1, die sich gegen den Dachhimmel bzw. Dachhimmelverkleidung abstützt. Der die Anlagefläche überragende Gtutzen 2 besitzt eine der Dicke der Polsterung des Dachhimmels entsprechende Länge und stützt sich mit seinem freien Stirnende unmittelbar an dem Karosserieblech des Fahrzeugs ab.

Das Gegenlagerböckchen ist zur wiederholten Aufnahme einer Sonnenblendenachse mit einer hinterschnittenen Lageröffnung 3 ausgebildet.

Beim Einführen der Sonnenblendenachse in die Lageröffnung 3 durch den Einführkanal 4 weicht der die Lageröffnung 3 einseitig begrenzende Schenkel 5 federelastisch zurück.

Zur Befestigung des Gegenlagerböckchens an der Fahrzeugkarosserie wird zweckmäßigerweise eine Blechschraube verwendet. Hierfür ist das Gegenlagerböckchen mit einer mittig angeordneten Durchstecköffnung 6 ausgebildet, die senkrecht zur Lageröffnung 3 ausgerichtet ist und die den Schenkel 5 und den Stutzen 2 durchdringt. Fußseitig, und zwar in Höhe der Anlagefläche 1 ist in der Durchstecköffnung 6 eine mit einem als Langloch ausgebildeten Durchbruch 7 versehene Anlagefläche 8 angeordnet, die zur Abstützung des Kopfes der Befestigungsschraube dient.

Die Durchstecköffnung 6 ist mit einem Deckel 9 verschließbar, der einstückig an dem Schenkel 5 des Gegenlagerböckchens über ein Filmscharnier 10 angeformt ist. An dem freien, dem Filmscharnier 10 abgewandten Ende besitzt der Deckel 9 eine zahnartig vorstehende Kante 11, die in eine an eine Randkante der Durchstecköffnung 6 angeordnete zahnlückenartige Rinne 12 einklipsbar ist. Dadurch ist der Deckel 9 sowohl in seiner offenen als auch in seiner geschlossenen Lage sicher gehaltert. In seiner geschlossenen Lage stützt sich der Deckel 9 auf einer umlaufenden stufenförmigen Absetzung 13 ab, die der die Durchstecköffnung 6 begrenzende Rand aufweist. Die Höhe der stufenförmigen Absetzung 13 entspricht dabei der Dicke des Deckels 9.

## Patentanspruch:

Gegenlagerböckchen für Fahrzeugsonnenblenden, das aus Kunststoff gebildet ist, eine hinterschnittene Lageröffnung (3) zur Aufnahme der Sonnenblendenachse aufweist und eine Durchstecköffnung (6) für ein Befestigungselement besitzt, in der fußseitig eine mit einem Durchbruch (7) versehene Anlagefläche (8) für den Kopf des Befestigungselementes angeordnet ist, dadurch gekennzeichnet, daß die Durchstecköffnung (6) mittels eines ihrem Öffnungsquerschnitt angepaßten, über ein Filmscharnier (10) einstückig an dem Gegenlagerböckchen angeformten Deckels (9) verschließbar ist, daß an dem freien, dem Filmscharnier (10) gegenüberliegenden Ende des Deckels (9) eine zahnartig vorstehende Kante (11) angeformt ist, die in eine an der benachbarten Randkante der Durchstecköffnung (6) angeordnete zahnlückenartige Rinne (12) einklipsbar ist, und daß der die Durchstecköffnung (6) begrenzende Rand eine umlaufende stufenförmige Absetzung (13) zur randseitigen Auflage des Deckels (9) aufweist, deren Höhe der Deckeldicke entspricht.

## Claim

A counter support bracket for a vehicle sun visor, the bracket being made of a synthetic plastics material and being provided with an undercut support aperture (3) for receiving the sun visor shaft and with a through-hole (6) for a fastening element, an abutment surface (8) having an opening (7) being arranged at the bottom of the trough-hole (6) and serving as a bearing surface for the head of the fastening element, characterized
in that the through-hole (6) is sealable by a cover (9) matching the through-hole's cross-sectional area and being integrally joined to the counter support bracket by means of a flexible thickness-reduced section (10),
in that a prong-like edge (11) is formed integrally with the cover (9) at the free end thereof which is opposite the thickness-reduced section (10) and is arranged to click into a tooth-gap-like groove (12) located at the adjoining lateral edge of the through-hole (6), and
in that the edge defining the trough-hole (6) is provided with a continuous step-like recess (13) which forms a seat for the edge of the cover and the height of which corresponds to the thickness of of the cover.

## Revendication

Butée support pour pare-soleil de véhicule réalisée en matière plastique comportant un logement (3) en contre-dépouille pour recevoir l'axe du pare-soleil et une ouverture traversante (6), pur un élément de fixation, dans laquelle est disposée, du côté du pied une surface d'appui (8) munie d'une perforation (7) pour la tête de l'élément de fixation, caractérisée en ce que l'ouverture traversante (6) peut être fermée au moyen d'un couvercle (9) adapté à la section de cette ouverture et formé d'une seule pièce sur la butée support avec interposition d'une charnière pelliculaire (10);
à l'extrémité libre du couvercle opposée à la charnière pelliculaire (10) est formée une arête (11) saillant à la façon d'une dent, qui peut s'encliqueter dans une rainure (12) analogue à un entredent disposée sur l'arête de bord voisine de l'ouverture traversante (6); et que
le bord délimitant l'ouverture traversante (6) comporte un décrochement périphérique (13) en forme de gradin pour servir d'appui au bord du couvercle (9), dont la hauteur correspond à l'épaisseur du couvercle.

11  9  Fig. 2

10

13

5  12

4  3

1  6

8

2

Schnitt A-A

5  Fig. 3  9

13

1  6

2  8

Schnitt B-B

Fig. 1

B

10  13

8

7

A  A

9

B

5